# EUROPEAN PATENT APPLICATION

(11) **EP 2 826 697 A1**
(43) Date of publication of application: **21.01.2015**
(21) Application number: 12837605.0
(22) Date of filing: 27.12.2012
(51) Int. Cl.: B62D 67/00

(54) **DEVICE FOR SEPARATING GLASS FROM DISCARDED VEHICLES**

(30) Priority: 17.02.2012 KR 20120155129
(71) Applicant: Industry-Academic Cooperation Foundation Yeungnam University, Gyeongbuk 712-749 (KR)
(72) Inventor: YI, Hwa Cho, Daegu 706-768 (KR)
(74) Representative: Schwabe - Sandmair - Marx
(86) International application number: PCT/KR2012/011636
(87) International publication number: WO 2013/122322

(57) **Abstract**

An apparatus for separating a windshield from a scrapped vehicle is disclosed. The apparatus includes a support base (100), a pressurizing unit (200) and a drive unit (300). The support base (100) is disposed on a center pillar or a seat of the scrapped vehicle. The pressurizing unit (200) is coupled at a first end thereof to the support base. A second end of the pressurizing unit comes into close contact with an inner surface of a front windshield or an inner surface of a rear windshield and pressurizes the front or rear windshield. The drive unit (300) is connected to the pressurizing unit and transmits a drive force to the pressurizing unit. The pressurizing unit includes a cylinder (210) which is coupled at an end thereof to the support base. The cylinder is operated by hydraulic or pneumatic pressure transmitted from the drive unit.

## Description

### [Technical Field]

The present invention relates, in general, to apparatuses for separating components of solid wastes and, more particularly, to an apparatus for separating a windshield from a scrapped vehicle.

### [Background Art]

As vehicle ownership increases, scrapped vehicle disposal has become a serious social problem. A method for reducing the amount of waste that comes from scrapped vehicles is keenly required.

Typical scrapped vehicle disposal includes just compacting a vehicle body using a press to reduce the volume thereof. Such pressed vehicle bodies are recycled in a steel mill or the like. However, scrapped vehicles have not only metal such as steel but also different kinds of materials, for example, glass or other materials. Therefore, there is much difficulty in recycling scrapped vehicles.

Particularly, when the vehicle body is pressed to reduce the volume thereof, windshields which have been attached to a scrapped vehicle are broken into pieces and some of the pieces of glass remain in the vehicle body. Such pieces of glass act as a factor that reduces a yield percentage of material when steel is melted.

Therefore, before the vehicle body is pressed, windshields are required to be removed from the vehicle body. However, because the operation of separating windshields from the vehicle body is manually carried out, it inconveniences a worker.

In addition, to separate a windshield from the vehicle body, a molding that has been formed between the windshield and the vehicle body must be removed. It is also not easy to remove the molding. Thus, much time and cost are required. Therefore, a technique related to this needs to be improved.

### [Disclosure]

### [Technical Problem]

Accordingly, the present invention has been made keeping in mind the above problems occurring in the prior art, and an object of the present invention is to provide an apparatus which can automatically separate a front or rear windshield from a scrapped vehicle.

Another object of the present invention is to provide an apparatus which can separate a front or rear windshield from a scrapped vehicle without carrying out a separate process of removing a molding.

### [Technical Solution]

In order to accomplish the above object, the present invention provides an apparatus for separating a windshield from a scrapped vehicle, including: a support base disposed on a center pillar or a seat of the scrapped vehicle; a pressurizing unit coupled at a first end thereof to the support base, the pressurizing unit coming, at a second end thereof, into close contact with an inner surface of a front windshield or an inner surface of a rear windshield and pressurizing the front or rear windshield; and a drive unit connected to the pressurizing unit, the drive unit transmitting a drive force to the pressurizing unit.

The pressurizing unit may include a cylinder coupled at an end thereof to the support base. The cylinder may be operated by hydraulic or pneumatic pressure transmitted from the drive unit.

The cylinder may include a housing and a cylinder rod extracted from or retracted into the housing. The apparatus may further include a pressurizing plate unit disposed between the cylinder rod and the front or rear windshield.

The pressurizing plate unit may comprise a pressurizing plate coming into contact with the front or rear windshield, the pressurizing plate being pressurized by the cylinder rod.

Furthermore, a plate support frame may be provided on a rear surface of the pressurizing plate, and the cylinder rod may be coupled to the plate support frame, so that when the cylinder rod pressurizes the plate support frame, the plate support frame distributes a pressure of the cylinder rod to the pressurizing plate.

The suction plate may be provided on the pressurizing plate so that the pressurizing plate is temporarily fastened to the front or rear windshield by the suction plate.

A medial portion of the pressurizing plate may have an arc shape that protrudes forwards.

The pressurizing plate may have a shape corresponding to a perimeter of the front or rear windshield.

An insert depression may be formed at a predetermined position in the plate support frame, and an end of the cylinder rod may be inserted into the insert depression.

The cylinder may comprise a plurality of cylinders respectively coupled to a plurality of portions of the support base, wherein when a pressure of one of the plurality of cylinders is reduced, the driver unit increases a pressure of the other cylinder.

When the pressures of the plurality of cylinders are reduced, the operation of the drive unit may be interrupted.

### [Advantageous Effects]

An apparatus for separating a windshield from a scrapped vehicle according to the present invention has the following effects.

First, the present invention can automatically separate a front or rear windshield from a scrapped vehicle. Therefore, the operation of separating the windshield from the vehicle can be facilitated.

Second, the present invention does not require an operation of removing a molding, thus reducing time and cost required to separate the front or rear windshield from the scrapped vehicle.

### [Description of Drawings]

FIG. 1 is a side view showing the operation of an apparatus for separating a windshield from a scrapped vehicle, according to the present invention;
FIG. 2 is a perspective view of the windshield separating apparatus of FIG. 1;
FIG. 3 is a plan view of a pressurizing plate unit of FIG. 1;
FIG. 4 is a side view showing the coupling of a cylinder to the pressurizing plate unit of FIG. 3;
FIG. 5 is a side view showing the coupling of cylinders to the pressurizing plate unit according to another embodiment of the present invention; and
FIG. 6 is a side view showing the operation of an apparatus for separating a windshield from a scrapped vehicle, according to a further embodiment of the present invention.

### [Best Mode]

An apparatus for separating a windshield from a scrapped vehicle according to the present invention includes a support base which is disposed on a center pillar or a seat of the scrapped vehicle, a pressurizing unit which is coupled at a first end thereof to the support base and comes, at a second end thereof, into close contact with an inner surface of a front windshield or an inner surface of a rear windshield and pressurizing the front or rear windshield, and a drive unit which is connected to the pressurizing unit and transmits drive force to the pressurizing unit.

### [Mode for Invention]

Hereinafter, an apparatus for separating a windshield from a scrapped vehicle according to the present invention will be described in detail with reference to the attached drawings.

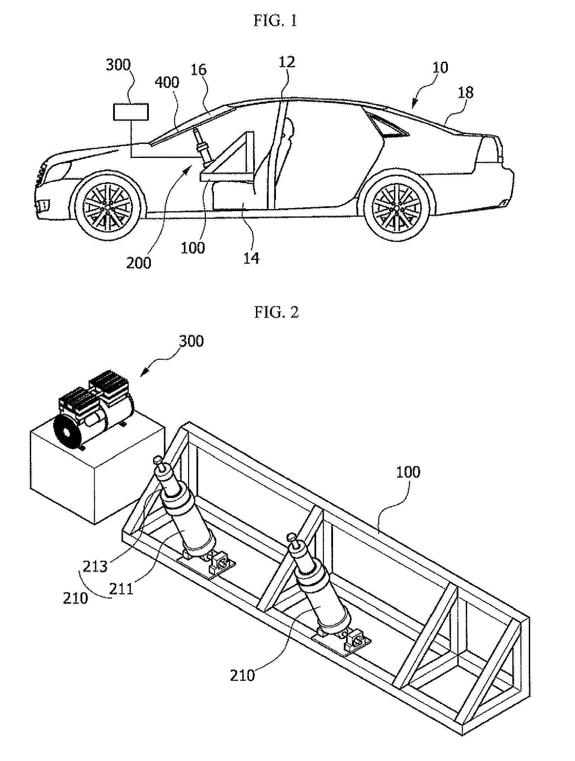

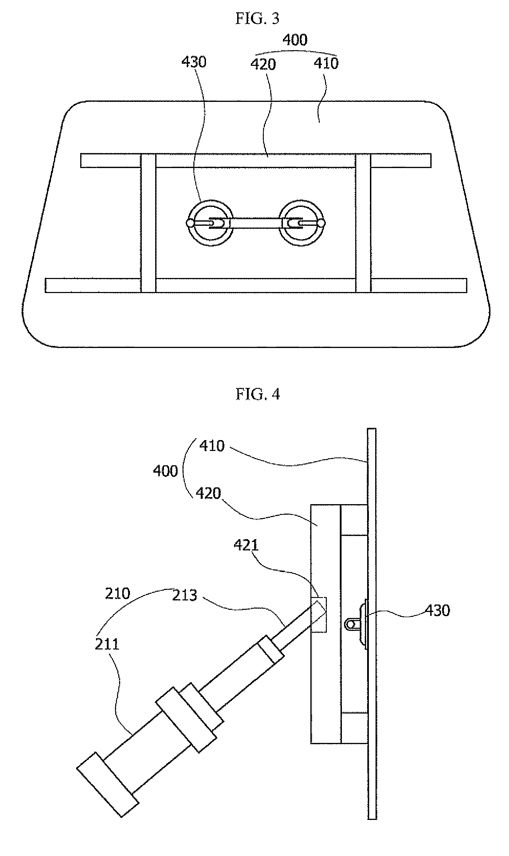

FIG. 1 is a side view showing the operation of an apparatus for separating a windshield from a scrapped vehicle, according to the present invention. FIG. 2 is a perspective view of the windshield separating apparatus of FIG. 1. FIG. 3 is a plan view of a pressurizing plate unit of FIG. 1. FIG. 4 is a side view showing the coupling of a cylinder to the pressurizing plate unit of FIG. 3.

In the conventional technique, a windshield is manually separated from a scrapped vehicle. However, there are problems in that it is not easy to carry out this manual work, and high cost and much time are required. The windshield separation apparatus according to the present invention includes a support base 100 which is placed onto a seat of a scrapped vehicle 10, a pressurizing unit 200 which pressurizes a windshield 16, and a drive unit 300 which transmits drive force to the pressurizing unit 200. When the drive unit 300 is activated, the apparatus can automatically separate the windshield 16 from the scrapped from the vehicle 10.

As shown in FIGS. 1 and 2, the pressurizing unit 200 is installed on the support base 100 of the windshield separation apparatus. In the case where a seat 14 is present in the scrapped vehicle 10, the support base 100 is placed on the seat 14 when the windshield separation apparatus separates the windshield 16 from the vehicle. In the case where the seat 14 has been removed, the support base 100 is placed on the floor of the scrapped vehicle 10 and supported by center pillars 12 when the windshield separation apparatus separates the windshield 16 from the vehicle.

Here, the center pillars 12 refer to pillars that are disposed between first row seat doors and second row seat doors among pillars which connect a vehicle body to a vehicle roof panel.

The pressurizing unit 200 functions to pressurize the windshield 16. A first end of the pressurizing unit 200 is connected to the support base 100, and a second end thereof is connected to the drive unit 300. When the drive unit 300 is operated, the pressurizing unit 200 pressurizes the windshield 16 to separate it from the vehicle.

The pressurizing unit 200 includes a cylinder 210 which is coupled at an end thereof to the support base 100. Preferably, the cylinder 210 is operated by hydraulic or pneumatic pressure. As shown in FIG. 2, the cylinder 210 is coupled to the support base 100 by a shaft so that the cylinder 210 can be rotated around the shaft in the clockwise or counterclockwise direction. Thereby, a position at which the cylinder 210 comes into contact with the windshield of the scrapped vehicle can be selected.

In detail, as shown in FIG. 2, the cylinder 210 includes a housing 211 which is coupled to the support base 100, and a cylinder rod 213 which is extracted from or retracted into the housing 211. To separate the windshield from the scrapped vehicle, an end of the cylinder rod 213 is brought into contact with the windshield before the drive unit 300 is operated.

Typically, a windshield for vehicles is provided with a film such that, even if it is broken, pieces of glass are maintained in a state of being attached to the film, rather than being separated from each other, so as to protect a driver or a passenger. Therefore, if an area of the end of the cylinder rod 213 is increased merely to an appropriate extent so as to distribute the force of the cylinder rod 213 that is applied to the windshield, the windshield can be easily separated from the scrapped vehicle. However, there is the possibility that only a portion of the windshield to which the force is directly applied is removed from the scrapped vehicle.

Therefore, as shown in FIG. 3, it is preferable that a pressurizing plate unit 400 be disposed between the cylinder rod 213 and the windshield 16 to pressurize the entirety or the perimeter of the windshield 16.

Referring to FIG. 3, the pressurizing plate unit 400 includes a pressurizing plate 410 and a plate support frame 410. Preferably, the pressurizing plate 410 has a shape corresponding to that of the windshield 16 to be separated.

The plate support frame 420 is installed on a rear surface of the pressurizing plate 410 to distribute the force of the cylinder rod 213 to the entire area of the pressurizing plate 410. Here, if the cylinder rod 213 is directly connected to the pressurizing plate 410 and force is repeatedly applied from the cylinder rod 213 to the pressurizing plate 410, the pressurizing plate 410 may be damaged. To prevent this, as shown in FIG. 3, the plate support frame 420 is preferably provided on the pressurizing plate 410. The plate support frame 420 functions to distribute force applied from the cylinder rod 213 and increase the strength of the pressurizing plate 410.

In an embodiment, as shown in FIG. 3, although the plate support frame 420 is illustrated as including a pair of horizontal frames which are parallel to each other and a pair of vertical frames which are parallel to each other, the plate support frame 420 can have any structure, so long as it can increase the strength of the pressurizing plate 410 and distribute the force applied from the cylinder rod 213 to the pressurizing plate 410.

In the case where the pressurizing plate 410 is used, the pressurizing plate 410 is temporarily fastened to the windshield of the scrapped vehicle, the support base 100 is placed on the first row seat of the scrapped vehicle, the end of the cylinder rod 213 is coupled to the pressurizing plate 410, and then the windshield is separated from the scrapped vehicle. During this process, a worker must temporarily fasten the pressurizing plate 410 to the windshield 16, before the cylinder rod 213 is coupled to the pressurizing plate 410. For this, a suction plate 430 which can be attached to glass is preferably provided on the pressurizing plate 410.

In this case, the pressurizing plate 410 is temporarily fastened to the windshield 16 by the suction plate 430, before the cylinder rod 213 is coupled to the pressurizing plate 410 to separate the windshield 16 from the scrapped vehicle.

Although the pressurizing plate 410 that has been described above can be formed in a variety of shapes, because the windshield 16 for vehicles generally has an arc shape, which is convex towards the front of the vehicle, it is preferable that the pressurizing plate 410 has a shape corresponding to such a shape of the windshield 16.

An insert depression 421 is preferably formed at a predetermined position in the plate support frame 420. The end of the cylinder rod 213 is inserted into the insert depression 421 and coupled to the plate support frame 420. If the insert depression 421 is not formed in the insert depression 421, the end of the cylinder rod 213 may be undesirably removed from the plate support frame 420 during the windshield separation operation. To prevent this, it is preferable that the insert depression 421 is formed in the plate support frame 420.

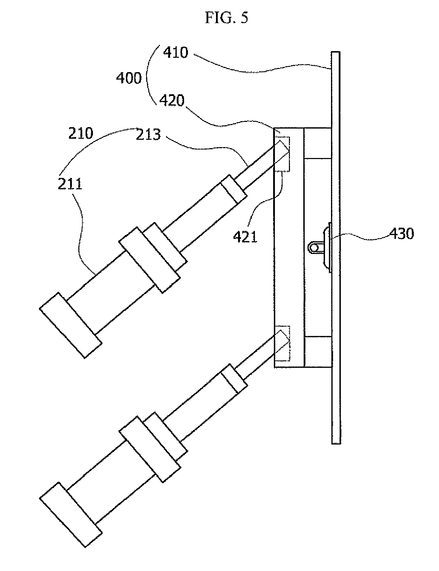

In another embodiment of the coupling of the cylinder to the pressurizing plate unit, referring to FIG. 5, a plurality of cylinders 210 are installed on different positions of the support base 100. In this case, the apparatus of the present invention may be configured such that when the pressure of any one of the cylinders is reduced, the drive unit 300 can increase the pressure of the other cylinder.

In the embodiment of FIG. 5, the cylinders 210 are respectively coupled to the junctions between the vertical frames and the horizontal frames. Even though the same pressure is applied to the cylinders 210 at the initial stage of the windshield separation operation, a portion of the windshield which is adjacent to any one cylinder 210 may be separated from the vehicle before the other portions of the windshield which are adjacent to the other cylinders 210. In this case, the cylinder rod 213 of the cylinder 210 associated with the portion of the windshield that is separated from the vehicle is extended more easily than the cylinder rods 213 of the other cylinders 210. Thus, the pressure of the cylinder 210 associated with the separated portion of the windshield is reduced compared to that of the other cylinders 210. Therefore, it can be determined by sensing variations of the cylinders 210 which portion of the windshield has been separated from the vehicle. Given this, the windshield can be more effectively separated from the vehicle by increasing the pressures of the cylinders 210 other than the cylinder 210 associated with the separated portion of the windshield.

Furthermore, when the pressures of all of the cylinders 210 are reduced, it can be determined that the windshield has been completely separated from the vehicle. In this case, the operation of the drive unit 300 is interrupted.

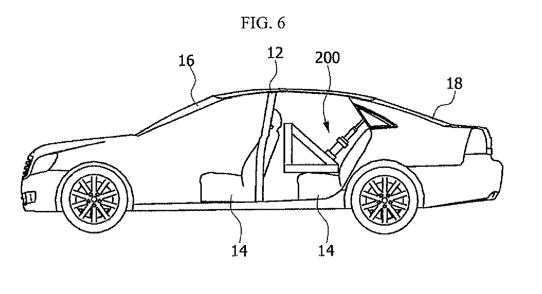

In the embodiment of FIGS. 1 and 5, although the windshield separation apparatus according to the present invention has been illustrated as being applied to the front windshield 16 of the scrapped vehicle 10, it may be used to separate a rear windshield 18 from the scrapped vehicle 10, as shown in FIG. 6 that illustrates the operation of another embodiment of the apparatus of the present invention.

In this case, the support base 100 is placed on the second row seat 14. The pressurizing plate 410 preferably has a shape corresponding to that of the rear windshield 18.

Although the preferred embodiments of the present invention have been disclosed for illustrative purposes, those skilled in the art will appreciate that the present invention is not limited the embodiments, and various modifications, additions and substitutions are possible, without departing from the scope and spirit of the invention as disclosed in the accompanying claims.

## Claims

1. An apparatus for separating a windshield from a scrapped vehicle (10), comprising:
a support base disposed on a center pillar (12) or a seat (14) of the scrapped vehicle (10);
a pressurizing unit (200) coupled at a first end thereof to the support base (100), the pressurizing unit (200) coming, at a second end thereof, into close contact with an inner surface of a front windshield (16) or an inner surface of a rear windshield (18) and pressurizing the front or rear windshield (16) or (18); and
a drive unit (300) connected to the pressurizing unit (200), the drive unit (300) transmitting a drive force to the pressurizing unit (200).

2. The apparatus according to claim 1, wherein the pressurizing unit (200) comprises a cylinder (210) coupled at an end thereof to the support base (100), the cylinder (210) being operated by hydraulic or pneumatic pressure transmitted from the drive unit (300).

3. The apparatus according to claim 2, wherein the cylinder (210) comprises a housing (211) and a cylinder rod (213) extracted from or retracted into the housing (211), the apparatus further comprising
a pressurizing plate unit (400) disposed between the cylinder rod (213) and the front or rear windshield (16) or (18).

4. The apparatus according to claim 3, wherein the pressurizing plate unit (400) comprises a pressurizing plate (410) coming into contact with the front or rear windshield (16) or (18), the pressurizing plate (410) being pressurized by the cylinder rod (213).

5. The apparatus according to claim 4, wherein a plate support frame (420) is provided on a rear surface of the pressurizing plate (410), and the cylinder rod (213) is coupled to the plate support frame (420), so that when the cylinder rod (213) pressurizes the plate support frame (420), the plate support frame (420) distributes a pressure of the cylinder rod (213) to the pressurizing plate (410).

6. The apparatus according to claim 4 or 5, wherein the suction plate (430) is provided on the pressurizing plate (410) so that the pressurizing plate (410) is temporarily fastened to the front or rear windshield (16) or (18) by the suction plate.

7. The apparatus according to claim 4, wherein a medial portion of the pressurizing plate (410) has an arc shape that protrudes forwards.

8. The apparatus according to claim 4, wherein the pressurizing plate (410) has a shape corresponding to a perimeter of the front or rear windshield (16) or (18).

9. The apparatus according to claim 5, wherein an insert depression (421) is formed at a predetermined position in the plate support frame (420), and an end of the cylinder rod (213) is inserted into the insert depression.

10. The apparatus according to claim 2, wherein the cylinder (210) comprises a plurality of cylinders (210) respectively coupled to a plurality of portions of the support base (100), wherein when a pressure of one of the plurality of cylinders (210) is reduced, the driver unit (300) increases a pressure of the other cylinder (210).

11. The apparatus according to claim 10, wherein when the pressures of the plurality of cylinders (210) are reduced, operation of the drive unit (300) is interrupted.
